# EUROPÄISCHE PATENTSCHRIFT

(11) **EP 3 073 299 B1**
(45) Veröffentlichungstag und Bekanntmachung des Hinweises auf die Patenterteilung: **29.12.2021**
(21) Anmeldenummer: 16168730.6
(22) Anmeldetag: 02.09.2010
(51) Int. Cl.: G02B 3/00, B29D 11/00

(54) **VORRICHTUNG UND VERFAHREN ZUM HERSTELLEN EINES LINSENWAFERS**
DEVICE AND METHOD FOR MAKING A LENS WAFER
DISPOSITIF ET PROCEDE DE FABRICATION D'UNE TRANCHE DE LENTILLES

(43) Veröffentlichungstag der Anmeldung: 28.09.2016
(62) Teilanmeldung aus: 10759573.8
(73) Patentinhaber: EV Group GmbH, 4782 St. Florian am Inn (AT)
(72) Erfinder: Kast, Michael, 4600 Wels (AT); Wimplinger, Markus, 4910 Ried im Innkreis (AT)
(74) Vertreter: Schweiger, Johannes

(56) Entgegenhaltungen:
- EP-A2- 1 201 409
- WO-A1-2010/087077
- US-A1- 2010 157 428
- None

## Beschreibung

Die vorliegende Erfindung betrifft eine Vorrichtung und ein Verfahren zum Herstellen, insbesondere Prägen, eines eine Vielzahl von Mikrolinsen aufweisenden Linsenwafers gemäß den Patentansprüchen 1 und 10.

Mikrolinsen finden in erster Linie Anwendung für Geräte, die eine optische Fokussiereinrichtung benötigen, wie beispielsweise für Kameras von Mobiltelefonen. Auf Grund des Miniaturisierungsdrucks sollen die funktionalen Bereiche immer kleiner werden. Je weiter die Mikrolinsen miniaturisiert werden sollen, desto schwieriger wird deren optisch korrekte Herstellung, weil gleichzeitig ein enormer Kostendruck für die idealerweise in Massenfertigung herzustellenden Mikrolinsen besteht. Im Stand der Technik werden Mikrolinsen auf einem Trägersubstrat durch unterschiedliche Herstellverfahren erzeugt, wie beispielsweise in der US 6,846,137 B1,

US 5,324,623, US 5,853,960 und US 5,871,888 gezeigt. Allen vorgenannten Verfahren ist gemein, dass prinzipbedingt eine gewisse Dicke notwendig ist und das durch die Mikrolinse durchtretende Licht nicht nur die Linse, sondern das Trägersubstrat passieren muss. Auf Grund der gleichzeitig geforderten hohen Qualität und der Anforderungen an höhere Auflösung bei gleichzeitig höherer Brillanz, die unter anderem von der Dicke und der Anzahl der Optiken entlang der optischen Achse, also des Strahlengangs, abhängt, ist eine weitere Optimierung der Mikrolinsen gemäß dem Stand der Technik wünschenswert.

Darüber hinaus besteht die Forderung nach einer möglichst hohen Lichtausbeute, die insbesondere für Mikrooptiksysteme entscheidend ist, da der Bildsensor eine meist sehr kleine Fläche einnimmt, auf die Licht auftreten kann.

In der EP 2 168 746 A1 ist ein Herstellverfahren für ein trägerloses Mikrolinsenfeld offenbart.

Problematisch bei der Herstellung von trägerlosen Mikrolinsenfeldern ist die Schrumpfung des Linsenfeldmaterials beim Herstellen des Linsenfeldes, insbesondere beim Prägen und Aushärten.

Der vorliegenden Erfindung liegt die Aufgabe zugrunde, ein Stempelwerkzeug beziehungsweise eine gattungsgemäße Vorrichtung beziehungsweise ein gattungsgemäßes Verfahren anzugeben, mit welchen, insbesondere in Massenfertigung, Linsenwafer mit Mikrolinsen hoher Lichtausbeute sowie hoher Brillanz und gleichzeitig hoher Fertigungsgenauigkeit herstellbar sind.

Diese Aufgabe wird mit den Merkmalen der Ansprüche 1 und 10 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Der Erfindung liegt der Gedanke zugrunde, ein Stempelwerkzeug zum Herstellen des Linsenwafers derart auszugestalten, dass der Stempel einen Prägeraum für die Aufnahme des aushärtbaren Fluids zur Herstellung des Linsenfeldes derart begrenzend ausgebildet ist, dass beim Prägen beziehungsweise Herstellen des Linsenfeldes automatisch ein seitlicher Umfangsrand des Linsenfeldes ausgebildet wird. Auf diese Art und Weise wird die Weiterverarbeitung des Linsenfeldes deutlich vereinfacht, da hierfür bereits vorhandene Trägersysteme und Handhabungsvorrichtungen verwendet werden können. Gleichzeitig wird es ermöglicht, ein sehr homogenes, optimal aushärtendes Linsenfeld mit hoher Genauigkeit herzustellen. Durch die erfindungsgemäße Ausgestaltung ist es außerdem möglich, praktisch beliebige Linsenformen mit einem einzigen Prägeschritt als, insbesondere monolithischer, Linsenwafer mit einer Vielzahl von Mikrolinsen herzustellen, insbesondere sphärische und/oder asphärische, konvexe und/oder konkave sowie Fresnellinsen.

Erfindungsgemäß ist durch die Ausgestaltung des Stempelwerkzeugs ein trägerloses Mikrolinsenfeld herstellbar, bei dem die Mikrolinsen auf Grund des Verzichts auf einen Träger eine geringere Dicke als Mikrolinsen mit Träger haben.

Gemäß einer vorteilhaften Ausführungsform des Stempelwerkzeugs ist es erfindungsgemäß vorgesehen, dass der Vorsprung als, insbesondere ringförmiger, vorzugsweise kreisförmiger, Damm ausgebildet ist, insbesondere mit einem Innendurchmesser Di von 200mm, 300mm oder 450mm. Hierdurch wird die Handhabung des Linsenwafers weiter vereinfacht.

Mit Vorteil ist weiterhin vorgesehen, dass der Prägeraum beim Prägen teilweise, insbesondere oben, von der zweiten Prägeseite begrenzt wird. Gemäß einer weiteren vorteilhaften Ausführungsform der Erfindung ist vorgesehen, dass mindestens einer der Stempel, insbesondere der erste Stempel, für elektromagnetische Strahlung durchlässig ist. Auf diese Weise kann nicht nur das Aushärten durch Bestrahlung durch den Stempel hindurch erfolgen, sondern auch die Erfassung von etwaigen Ausrichtungsmarken zur Ausrichtung und Keilfehlerkompensation bei der Herstellung des Linsenwafers.

Die Erfindung ist dadurch gekennzeichnet, dass der erste Stempel erste Ausrichtungsmarken zur Ausrichtung des ersten Stempels gegenüber zweiten Ausrichtungsmarken des zweiten Stempels aufweist. Hierdurch und insbesondere durch Integration der Ausrichtungsmarken in den Stempel, vorzugsweise in den Vorsprung, wird ein hochgenaues Ausrichten der Stempel ermöglicht und durch die erfindungsgemäße Ausgestaltung des Stempelwerkzeuges mit einem Vorsprung werden Folgefehler bei der Weiterverarbeitung und weiteren Handhabung minimiert beziehungsweise ganz ausgeschlossen. Vom Rand des mit dem erfindungsgemäßen Stempelwerkzeug hergestellten Linsenwafers lässt sich genau auf die Position jeder einzelnen, in Linsenwafer vorgesehenen Mikrolinse zurückschließen, selbst wenn eine Schrumpfung des Linsenwafermaterials stattgefunden hat. Mit der vorliegenden Erfindung wird eine Ausrichtungsgenauigkeit in X- und Y-Richtung mit einer reproduzierbaren Genauigkeit von weniger als 3µm, insbesondere weniger als 1µm, vorzugsweise weniger als 0,5µm, noch bevorzugter weniger als 0,1µm, Abweichung in der Ausrichtungsgenauigkeit möglich.

Die erfindungsgemäße Vorrichtung weist neben dem vorbeschriebenen Stempelwerkzeug folgende Merkmale auf:
- eine erste Aufnahmeeinrichtung zur, insbesondere statisch fixierten, Aufnahme des ersten Stempels an einer von der ersten Prägeseite abgewandten Aufnahmeseite. Die Aufnahmeeinrichtung kann ein Chuck sein, der an einem fixen beziehungsweise statischen Gestell montiert ist. Die Fixierung des ersten Stempels kann beispielsweise über Vakuumrillen erfolgen.
- eine zweite Aufnahmeeinrichtung zur Aufnahme des zweiten Stempels an dessen von der zweiten Trägerseite abgewandten Aufnahmeseite. Die Aufnahmeeinrichtung kann insbesondere ebenfalls als Chuck, vorzugsweise mit einer Fixierung durch Vakuumrillen, ausgebildet sein.

Die Vorrichtung ist derart ausgebildet, dass sie eine gesteuerte Bewegung des zweiten Stempels in einer X-Y-Ebene und einer dazu orthogonal verlaufenden Z-Richtung sowie eine gesteuerte Rotation um eine parallel zur Z-Richtung verlaufende Rotationsachse zur Ausrichtung des ersten Stempels mit dem zweiten Stempel ausführen kann. Die X-Y-Ebene ist im wesentlichen parallel zu den Prägeseiten der Stempel beim Prägen.

Weiterhin ist die Vorrichtung so steuerbar, dass die Ausrichtung anhand der Position der Stempel, insbesondere der Position der Ausrichtungsmarken erfolgt.

Gemäß einer vorteilhaften Ausführungsform der erfindungsgemäßen Vorrichtung ist ein Hubantrieb vorgesehen, durch welchen die Bewegung der zweiten Aufnahmeeinrichtung in Z-Richtung ausführbar ist. Der Hubantrieb besteht insbesondere aus drei motorisierten, voneinander unabhängigen, bevorzugt rotationssymmetrisch am Umfang in einem Winkelabstand von 120 Grad zueinander in Axialrichtung parallel positionierten Spindeltrieben. Hierdurch wird einerseits die parallele Bewegung des zweiten Stempels auf der Aufnahmeeinrichtung in Z-Richtung ermöglicht. Andererseits kann der Hubantrieb gleichzeitig ein Verkippen des zweiten Stempels bewirken.

Soweit die erfindungsgemäße Vorrichtung Keilfehlerausgleichsmittel umfasst, mit welchen ein Keilfehler zwischen den Stempeln ausgleichbar ist, sind die Stempel exakt zueinander parallel ausrichtbar, wodurch eine homogene Linse mit optimaler optischer Achse herstellbar ist. Dies ist insbesondere dann wichtig, wenn mehrere Linsen später gestapelt werden.

Die Keilfehlerausgleichsmittel sind mit Vorteil als Ausrichtetisch oder - chuck vorgesehen, der auf den Hubantrieb fixiert ist.

In einer weiteren Ausführungsform der Erfindung ist vorgesehen, dass eine, insbesondere in Z-Richtung bewegbare, Optik zur Erfassung der Position jeder der Ausrichtungsmarken in X-Y- und Z-Richtung vorgesehen ist.

Das erfindungsgemäße Verfahren ist unter Verwendung des vorbeschriebenen Stempelwerkzeugs und/oder der vorbeschriebenen Vorrichtung durch folgende Verfahrensschritte gekennzeichnet:
- die Stempel werden auf den korrespondierenden Aufnahmeeinrichtungen gegenüberliegend angeordnet und fixiert,
- soweit erforderlich erfolgt eine zumindest grobe Ausrichtung (sogenanntes Pre-alignment) der Stempel zueinander in X- und Y-Richtung sowie in Rotationsrichtung um die Rotationsachse, insbesondere mit einer Genauigkeit von weniger als 100µm, vorzugsweise weniger als 50µm, noch bevorzugter weniger als 10µm,
- ein Keilfehlerausgleich erfolgt durch Keilfehlerausgleichsmittel, um die Prägeseiten parallel auszurichten, insbesondere mit einer Genauigkeit von weniger als 5µm, vorzugsweise weniger als 3µm, noch bevorzugter weniger als 1µm,
- anschließend erfolgt die Aufbringung eines aushärtbaren Fluids, insbesondere eines Polymers, in fluider Form auf eine der flächigen Prägeseiten, insbesondere die zweite Prägeseite, die vorzugsweise unten angeordnet ist und durch den Vorsprung einen Prägeraum bildet, dessen Boden die zwei Prägeseite bildet,
- Prägen des Linsenwafers durch Formung und anschließende Aushärtung des aushärtbaren Fluids, wobei die Formung durch Aufeinander-zu-Bewegung der Stempel erfolgt.

Gemäß einer vorteilhaften Ausführungsform des Verfahrens ist vorgesehen, dass das Prägen ohne Kontakt zwischen den Stempeln erfolgt. Hierdurch wird ein offener Ringspalt am Seitenrand des Prägeraums gebildet, der ein seitliches Austreten des aushärtbaren Fluids beim Formen des Linsenwafers beziehungsweise beim Prägen des Linsenwafers zulassend ausgebildet ist.

Soweit das Prägen in Z-Richtung kraft- und/oder positionsgeregelt erfolgt, ist eine genaue Definition und homogene Herstellung des Linsenwafers mit einer reproduzierbaren Genauigkeit von weniger als 10µm, insbesondere weniger als 5µm, vorzugsweise weniger als 3µm, noch bevorzugter weniger als 1µm Abweichung in der Ausrichtungsgenauigkeit möglich.

Der erste und der zweite Stempel sind als Linsenstempel mit den die Mikrolinsen ausbildenden Negativen, also konkave/konvexe Prägestrukturen, ausgestaltet, wobei auch spärische/asphärische und/oder Fresnellinsen denkbar sind. Bei einem Durchmesser eines Linsenstempels von circa 200mm können beispielsweise etwa 2000 Mikrolinsen in einem Prägeschritt geprägt werden.

Das aushärtbare Fluid kann erfindungsgemäß aus einem UV-härtbaren oder thermisch härtbaren Material gebildet sein, wobei das Linsenmaterial erfindungsgemäß zumindest überwiegend, vorzugsweise vollständig lösungsmittelfrei und zur vollständigen Vernetzung geeignet ist.

Durch eine monolithische Herstellung des Linsenwafers weist dieser einen homogenen thermischen Ausdehnungskoeffizienten auf, so dass jede aus dem Linsenwafer hergestellte Mikrolinse bei unterschiedlichen Temperaturzuständen selbstähnlich ist und ihre optischen Eigenschaften quasi nicht ändert.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1:: eine schematische, geschnittene Seitenansicht einer erfindungsgemäßen Vorrichtung zum Herstellen eines eine Vielzahl von Mikrolinsen aufweisenden Linsenwafers,
- Figur 2a:: eine schematische, geschnittene Seitenansicht eines erfindungsgemäßen Stempelwerkzeuges zur Herstellung eines eine Vielzahl von Mikrolinsen aufweisenden Linsenwafers in einer ersten Ausführungsform,
- Figur 2b:: eine schematische, geschnittene Seitenansicht des erfindungsgemäßen Stempelwerkzeuges in einer zweiten Ausführungsform,
- Figur 2c:: eine schematische, geschnittene Seitenansicht des mit einem Stempelwerkzeug gemäß Figur 2a oder Figur 2b beziehungsweise einer Vorrichtung gemäß Figur 1 hergestellten Linsenwafers,
- Figuren 3a bis 3c:: eine schematische Darstellung von dem Verfahrensablauf des Prägens eines Linsenwafers mit dem Stempelwerkzeug gemäß Figur 2a,
- Figuren 4a bis 4c:: eine schematische Darstellung von dem Verfahrensablauf des Prägens eines Linsenwafers mit dem Stempelwerkzeug gemäß Figur 2b,
- Figuren 5a bis 5c:: eine schematische, geschnittene Seitenansicht des erfindungsgemäßen Stempelwerkzeuges in einer dritten Ausführungsform und den entsprechenden Verfahrensablauf des Prägens des Linsenwafers und
- Figur 6:: eine schematische Aufsicht auf einen zweiten Stempel des Stempelwerkzeugs gemäß Figur 5.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleich wirkender Funktion mit identischen Bezugszeichen gekennzeichnet sind.

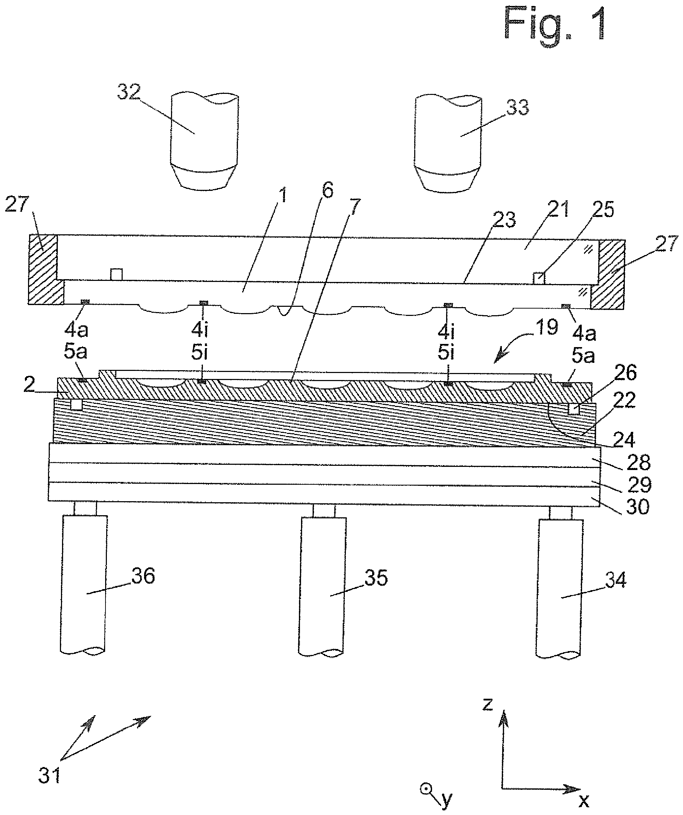

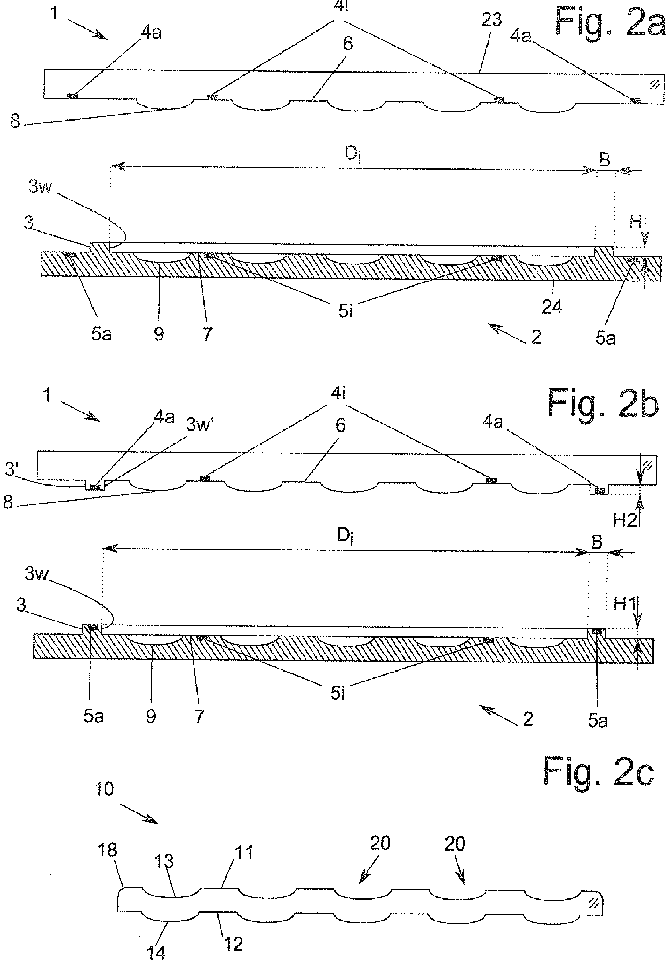

In Figur 1 ist ein System aus einer erfindungsgemäßen Vorrichtung mit einem erfindungsgemäßen Stempelwerkzeug gezeigt. Das Stempelwerkzeug besteht aus einem ersten Stempel 1 und einem zweiten Stempel 2 und das Stempelwerkzeug ist in einer ersten und zweiten Ausführungsform gemäß Figuren 2a und 2b detailliert dargestellt und weiter unten beschrieben. ln Figur 1 ist das Stempelwerkzeug gemäß der in Figur 2a gezeigten Ausführungsform in der Vorrichtung eingesetzt.

Der erste Stempel 1 wird an seiner ersten Aufnahmeseite 23, insbesondere waagerecht, durch mindestens eine Vakuumbahn 25 an einer ersten Aufnahmeeinrichtung 21 fixiert. Die erste Aufnahmeeinrichtung 21 ist durch eine, insbesondere ringförmige, vorzugsweise kreisringförmige, Halterung 27 starr und möglichst erschütterungsfrei fixiert, insbesondere an einem in den Figuren nicht dargestellten massiven Gestell.

Die erste Aufnahmeeinrichtung 21 ist als, insbesondere für elektromagnetische Strahlung zumindest teilweise durchlässiger, Chuck ausgebildet. Bei der elektromagnetischen Strahlung handelt es sich insbesondere um sichtbares oder UV-Licht. Auch der erste Stempel 1 ist für elektromagnetische Strahlung, insbesondere sichtbares Licht, durchlässig.

Der erste Stempel 1 weist, insbesondere an seiner zur ersten Aufnahmeseite 23 gegenüberliegenden ersten Prägeseite 6, insbesondere eingebettete erste Ausrichtungsmarken 4a, 4i auf. Die Position der ersten Ausrichtungsmarken 4a, 4i in einer in Figur 1 waagerecht liegenden X- und zur X-Richtung orthogonalen Y-Richtung sowie in einer senkrecht dazu verlaufenden Z-Richtung ist durch eine hier aus Mikroskopen 32, 33 bestehenden, insbesondere optischen, Detektoreinrichtung erfassbar.

Die Detektoreinrichtung, insbesondere die Mikroskope 32, 33, sind in X-, Y- und/oder Z-Richtung verfahrbar und jeweils fixierbar, um die Positionen der Ausrichtungsmarken 4a, 4i erfassen zu können. Die Detektoreinrichtung funktioniert derart, dass sie elektromagnetische Strahlung in Richtung der Ausrichtungsmarken 4a, 4i aussendet und dadurch die Position der Ausrichtungsmarken 4a, 4i detektiert. Die Detektoreinrichtung ist an der von der ersten Aufnahmeseite 23 abgewandten Seite der ersten Aufnahmeeinrichtung 21, also oberhalb des ersten Stempels 1 und der ersten Aufnahmeeinrichtung 21 angeordnet, und an dem Gestell gelagert.

Unterhalb der ersten Aufnahmeeinrichtung 21 und des ersten Stempels 1 ist eine zweite Aufnahmeeinrichtung 22 angeordnet und gegenüber der ersten Aufnahmeeinrichtung in der X-, Y- und/oder Z-Richtung ausrichtbar. Weiterhin ist die zweite Aufnahmeeinrichtung 22 durch eine Rotationseinrichtung 28 um eine in Z-Richtung verlaufende Rotationsachse rotierbar. Die Bewegung in X-Richtung wird durch einen X-Antrieb 29 ausgeführt, der von einer nicht dargestellten Steuereinrichtung gesteuert wird. Die Bewegung in Y-Richtung wird durch einen benachbart zum X-Antrieb 29 angeordneten Y-Antrieb 30 ausgeführt, der ebenfalls von der Steuereinrichtung gesteuert wird. Die Steuereinrichtung steuert darüber hinaus die Rotationseinrichtung 28 und das Verfahren der Detektoreinrichtung beziehungsweise der einzelnen Mikroskope 32, 33.

Die Bewegung der zweiten Aufnahmeeinrichtung 22 in Z-Richtung erfolgt durch einen Hubantrieb 31, insbesondere bestehend aus Aktoren 34, 35, 36. Die Aktoren 34, 35, 36 sind insbesondere in Z-Richtung wirkend ausgerichtet. Als Aktoren 34, 35, 36 kommen beispielsweise Spindeln in Frage. Die Aktoren 34, 35, 36 sind jeweils einzeln durch die Steuereinrichtung steuerbar. Die Aktoren 34, 35, 36 sind vorzugsweise an einem Seitenumfang unterhalb des X-Antriebes 29, des Y-Antriebes 30 oder der Rotationseinrichtung 28 verteilt angeordnet, damit die auf dem Hubantrieb 31 angeordneten Bauteile sicher auf dem Hubantrieb aufliegen und eine genau steuerbare Bewegung der zweiten Aufnahmeeinrichtung 22, insbesondere ein Keilfehlerausgleich, durch die unabhängig voneinander steuerbare Ein- und Ausfahrbewegung der Aktoren 34, 35, 36 erfolgen kann. Auf der zweiten Aufnahmeeinrichtung 22 ist an einer zur ersten Aufnahmeseite 23 gegenüberliegenden zweiten Aufnahmeseite 24 der zweite Stempel 2 aufnehmbar. Die Fixierung erfolgt durch mindestens eine Vakuumbahn 26, die vorzugsweise am Seitenumfang des zweiten Stempels 2 angeordnet ist.

Der zweite Stempel 2 weist, insbesondere ein an seiner zur ersten Aufnahmeseite 23 abgewandten zweiten Prägeseite 7, insbesondere eingebettete, zweite Ausrichtungsmarken 5a, 5i auf. Die Positionen der zweiten Ausrichtungsmarken 5a, 5i sind durch die oberhalb der ersten Aufnahmeeinrichtung 21 angeordnete Detektoreinrichtung erfassbar, so dass durch die Erfassung der Positionen der jeweils gegenüberliegend angeordneten, korrespondierenden Ausrichtungsmarken 4a, 4i, 5a, 5i eine genaue Steuerung der Bewegung des ersten Stempels 1 relativ zu dem zweiten Stempel 2 ermöglicht wird.

Die erste Prägeseite 6 ist somit parallel und gegenüberliegend zur zweiten Prägeseite 7 anordenbar und ausrichtbar, und zwar während des gesamten Prägevorganges.

Die erste Prägeseite 6 weist erste Prägestrukturen 8 und die zweite Prägeseite 7 weist zweite Prägestrukturen 9 auf. Die Prägestrukturen 8, 9 entsprechen dem Negativ einer Oberseite 11 und einer Unterseite 12 eines mit dem Stempelwerkzeug beziehungsweise der erfindungsgemäßen Vorrichtung hergestellten Linsenwafers 10 jede korrespondierende, gegenüberliegende Einzelstruktur der ersten und zweiten Prägestrukturen 8, 9 entspricht damit dem Negativ einer ersten optisch aktiven Fläche 13 und einer zweiten optisch aktiven Fläche 14 der korrespondierenden Mikrolinse 20. Die Mikrolinsen 20 können nach Herstellung des Linsenwafers 10 vereinzelt werden, beispielsweise durch Schneiden.

Außerhalb der von den Prägestrukturen 8, 9 gebildeten Fläche ist erfindungsgemäß zumindest an einem der beiden Stempel 1, 2, insbesondere zumindest am zweiten Stempel 2, ein, insbesondere ringförmiger, vorzugsweise kreisringförmiger, Vorsprung vorgesehen. Der Vorsprung ist insbesondere als Damm 3, 3' ausgebildet.

Bei der in Figur 2a gezeigten Ausführungsform der Erfindung weist ausschließlich der zweite Stempel 2 einen Damm 3 auf, der von der zweiten Prägeseite 7 hervorsteht und die zweiten Prägestrukturen 9 überragt. Mit seiner in Richtung der zweiten Prägestrukturen 9 weisenden Wand 3w bildet der Vorsprung gemeinsam mit der zweiten Prägeseite 7 einen wannenförmigen Raum, der Teil eines Prägeraumes 19 ist.

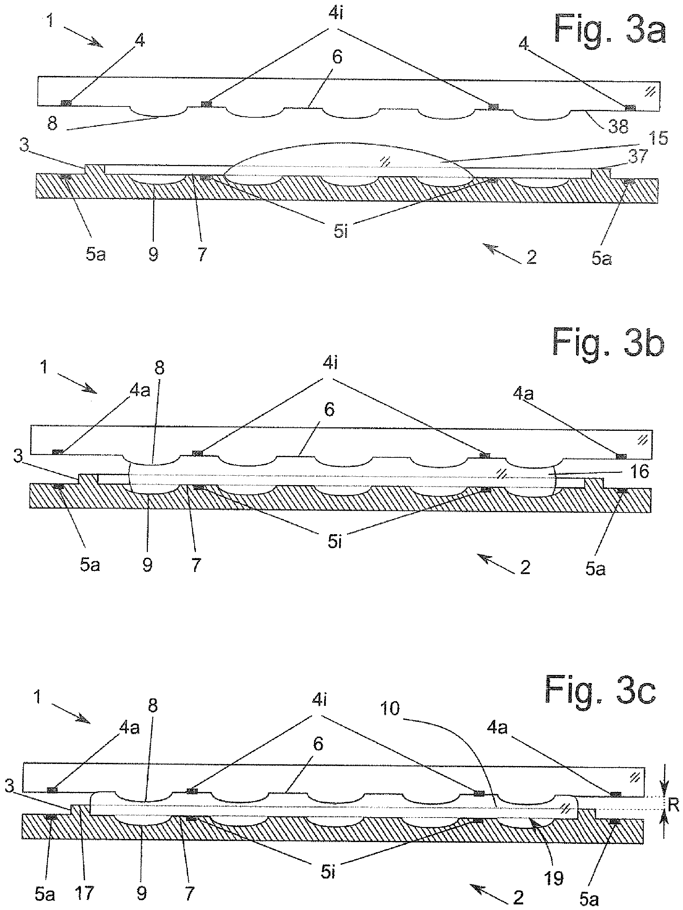

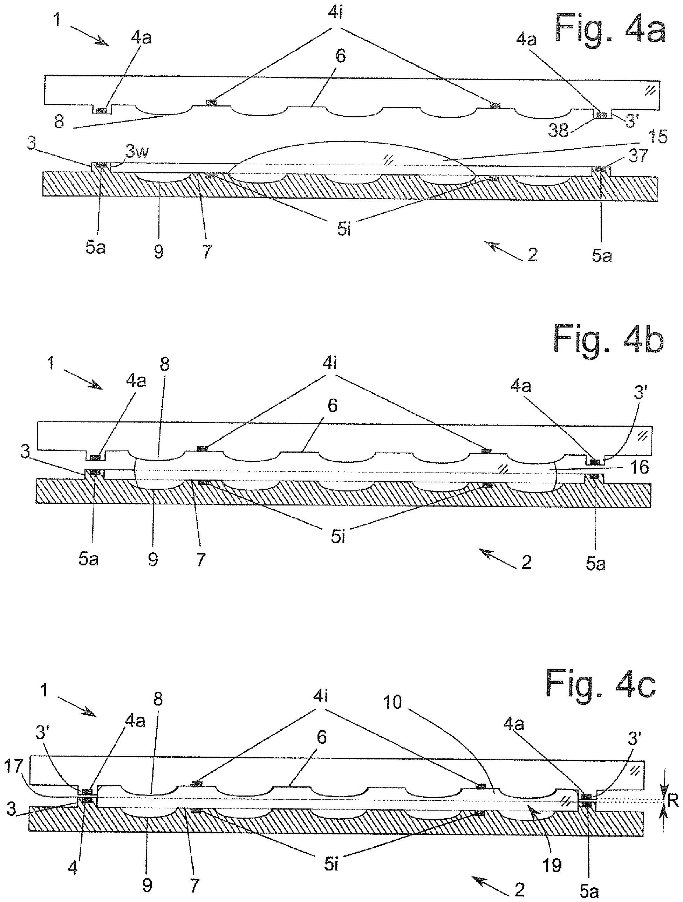

Der Prägeraum 19 wird weiterhin in der Prägeposition gemäß Figuren 3c und 4c von der ersten Prägeseite 6 gebildet.

Der Prägeraum 19 weist an seiner, insbesondere kreisringförmigen, Wand 3w einen Innendurchmesser Di auf, der dem Durchmesser des herzustellenden Linsenwafers 10 gemäß Figur 2d im Wesentlichen entspricht. Im Wesentlichen bedeutet dabei, dass eine etwaige Schrumpfung des Linsenwafers 10 beim Prägen beziehungsweise Aushärten zu Berücksichtigen ist.

In der in Figur 2b gezeigten Ausführungsform weist der erste Stempel 1 ebenfalls einen als Damm 3' ausgebildeten Vorsprung auf, der mit seiner Wand 3w' entsprechend der Wand 3w den Prägeraum 19 begrenzt.

In der in Figur 2a gezeigten Ausführungsform der Erfindung sind als erste Ausrichtungsmarken 4a, 4i mindestens zwei im Bereich der ersten Prägestrukturen 8 angeordnete innere Ausrichtungsmarken 4i vorgesehen. Zusätzlich sind mindestens zwei äußere Ausrichtungsmarken 4a außerhalb der ersten Prägestrukturen 8, insbesondere außerhalb des Vorsprungs vorgesehen.

In der in Figur 2b gezeigten Ausführungsform der Erfindung sind die äußeren Ausrichtungsmarken 4a im Vorsprung, insbesondere im Damm 3, vorgesehen. Der Damm 3 ist dem Damm 3' gegenüberliegend angeordnet und korrespondierend zu diesem ausgebildet.

Der Damm 3, 3' weist eine Ringbreite B und eine Höhe H auf, wobei die Höhe H beziehungsweise bei der Ausführungsform gemäß Figur 2b die Höhen H1, H2 der mit 3, 3' in etwa mit den Höhen der ersten und zweiten Prägestrukturen 8, 9 korrespondieren.

Durch die Integration der äußeren Ausrichtungsmarken 4a, 5a in die Dämme 3, 3' ist nicht nur die Position der Ausrichtungsmarken 4a, 5a, sondern gleichzeitig auch die Position der Dämme 3, 3' in Z-Richtung erfassbar, wohingegen bei der Ausführungsform gemäß Figur 2a die Höhe H gespeichert ist.

Durch die erfindungsgemäße Vorrichtung sind die Stempel 1, 2 so steuerbar, dass in der Prägeposition zumindest zwischen einer Stirnseite 37 des Damms 3 und einer gegenüberliegend anordenbaren Stirnseite 38 der ersten Prägeseite 6 beziehungsweise des Damms 3' ein Abstand R vorgesehen ist, der kleiner oder gleich der Höhe H, H1 oder H2 des Damms 3 beziehungsweise der Dämme 3, 3' ist.

In den Figuren 3a und 4a sind die Stempel 1, 2 so weit beabstandet, dass ein aushärtbares Fluid 15 insbesondere als Pfütze, auf die zweite Prägeseite 7 aufgebracht wird. Die Pfütze entsteht auf Grund der Oberflächenspannung des aushärtbaren Fluids 15. Das aushärtbare Fluid 15 wird vorzugsweise zentriert also etwa äquidistant oder konzentrisch zu der Wand 3w aufgebracht.

Gemäß Figuren 3b und 4b wird der zweite Stempel 2 durch den Hubantrieb 31 in Z-Richtung auf den ersten Stempel 1 zu bewegt, so dass das noch in fluider Form vorliegende aushärtbare Fluid 15 allmählich in Richtung der Wand 3w vordringt, bis die in Figuren 3c und 4c gezeigte Prägeposition erreicht ist.

Die Menge des aushärtbaren Fluids 15 ist genau so dosiert, dass der Prägeraum 19 in der Prägeposition nahezu vollständig von dem aushärtbaren Fluid 15 ausgefüllt wird. Mit Vorteil ist die Menge so bemessen, dass an der seitlichen oberen Umfangskante 18 des Linsenwafers 10 eine runde Umfangskante entsteht, so dass die Ausrichtung des Linsenwafers 10 ohne weiteres feststellbar ist. An der gegenüberliegenden seitlichen Umfangskante weist der Linsenwafer 10 herstellungsbedingt eine eckige Kante auf.

Während der durch die Steuerungseinrichtung gesteuerten Bewegung der Stempel 1, 2 aufeinander zu, werden laufend die Positionen der Ausrichtungsmarken 4a, 4i, 5a, 5i von der Detektoreinrichtung erfasst und an die Steuereinrichtung weitergegeben, die aus den Relativpositionen der korrespondierenden Ausrichtungsmarken 4a, 4i, 5a, 5i die erforderlichen Steuerbefehle für die Rotationseinrichtung 28, den X-Antrieb 29, den Y-Antrieb 30 und den Hubantrieb 31 beziehungsweise die einzelnen Aktoren 34, 35 und 36 weitergibt. Durch die Aktoren 34, 35 und 36 kann gleichzeitig eine Keilfehlerkompensation erfolgen.

In dem in der Prägeposition ein Mindestabstand R zwischen dem ersten Stempel 1 und dem zweiten Stempel 2 vorgesehen ist, kann eine homogene und perfekte Form des Linsenwafers 10 gewährleistet werden, wobei auch eine Schrumpfung des aushärtbaren Fluids beim Prägen beziehungsweise Aushärten zum fertigen Linsenwafer berücksichtigt werden kann.

Der durch die erfindungsgemäße Vorrichtung beziehungsweise das erfindungsgemäße Verfahren oder das erfindungsgemäße Stempelwerkzeug hergestellte Linsenwafer 10 ist unmittelbar und ohne weitere Bearbeitungsschritte nach dem Prägen auf Grund seiner vorgegebenen Außenkontur durch standardisierte Waferbearbeitungswerkzeuge handhabbar.

Ein weiterer besonderer Vorteil der Erfindung besteht darin, dass erfindungsgemäß ein monolithischer Linsenwafer 10 herstellbar ist, bei dem auf ein Trägersubstrat verzichtet werden kann, so dass der Formfaktor von aus solchen Linsenwafern 10 beziehungsweise den daraus gewonnenen Mikrolinsen 20 hergestellte Wafer-Levelkameras verkleinert werden kann und gleichzeitig die Fertigungskosten sinken, da eine Massenproduktion ohne weiteres möglich ist.

Der Einsatz eines Polymers als aushärtbares Fluid wirkt sich weiter positiv auf die Kosten der Mikrolinsen 20 aus.

Die Schrumpfung des aushärtbaren Fluids beim Prägen beziehungsweise Aushärten kann dadurch optimiert werden, dass der Hubantrieb 31 kraftgeregelt ist.

Für die weitere Bearbeitung des monolithischen Linsenwafers können durch das Stempelwerkzeug und die erfindungsgemäße Vorrichtung gleichzeitig folgende Eigenschaften des Linsenwafers berücksichtigt werden, nämlich der Außendurchmesser, die Dicke und das automatische Einprägen von Alignmentpassmarken in den Linsenwafer 10 für spätere Bearbeitungsprozesse beispielsweise das Schneiden des Linsenwafers 10 zum Vereinzeln der einzelnen Mikrolinsen 20.

Die Aktoren 34, 35, 36 sind insbesondere als drei motorisierte, voneinander unabhängig betriebene, insbesondere rotationssymmetrisch in einem Abstand von 120° zueinander parallel positionierte Spindeln ausgebildet. Hierdurch wird die parallele Bewegung des aus dem X-Antrieb 29 und Y-Antrieb 30 und der Rotationseinrichtung 28 bestehenden Ausrichtetisch mitsamt der Werkzeughalterung, also der zweiten Aufnahmeeinrichtung 22 in Z-Richtung sowie gleichzeitig die Kippung in beliebige Richtung, die für den Keilfehlerausgleich notwendig ist, ermöglicht. Hierin sind die erfindungsgemäßen Keilfehlerausgleichsmittel zu sehen.

Während des Prägevorganges kann die Prägekraft durch in den Hubantrieb 31, insbesondere jeden Aktor 34, 35, 36, integrierte Druckmesszellen kontinuierlich gemessen und gleichzeitig geregelt werden. Die Druckmesszellen können beispielsweise zwischen den Spindeln und dem Auflagepunkt auf der Unterseite des Ausrichtetisches implementiert sein. Gemäß einer alternativen Ausführungsform der Erfindung ist die erste Aufnahmeeinrichtung 21 nicht statisch, sondern in mindestens einer vorgeschriebenen Richtung, also X-, Y- und/oder Z-Richtung und/oder in Rotationsrichtung antreibbar.

Die Ausrichtung der Stempel 1, 2 kann auch erfolgen, bevor das aushärtbare Fluid 15 auf den zweiten Stempel 2 aufgebracht wird.

Die Aushärtung des aushärtbaren Fluids 15 erfolgt insbesondere durch UV-Strahlung und/oder thermische Aushärtung.

In Bezug auf die Ausrichtung der Stempel 1, 2 (Alignment) ist das erfindungsgemäße Verfahren des Mikrolinsenprägens den Dickschichtprozessen zugeordnet. Auf Grund der Dicken der monolithischen Linsenwafer 10 zwischen 0,2mm und 2mm und des begrenzten Tiefenschärfebereichs der optischen Detektoreinrichtung wird die Detektoreinrichtung in Z-Richtung so positioniert, dass die Ausrichtungsmarken 4a, 4i, 5a, 5i der Stempel 1, 2 während des Ausrichtevorganges innerhalb der Tiefenschärfe der Detektoreinrichtung scharf abbildbar sind. Alternativ hierzu ist es erfindungsgemäß denkbar, dass die Detektoreinrichtung in Z-Richtung statisch fixiert ist und ein synchrones Verfahren der Stempel in Z-Richtung erfolgt.

Insofern ist die Ausführungsform gemäß Figur 2b besonders vorteilhaft, da die Ausrichtungsmarken 4a und 5a einen geringstmöglichen Abstand voneinander haben.

Gemäß einer bevorzugten Ausführungsform der Erfindung erfolgt das genaue Ausrichten der Stempel in X- und Y-Richtung sowie in Rotationsrichtung mit einer reproduzierbaren Genauigkeit von weniger als 3µm, insbesondere weniger als 1µm, vorzugsweise weniger als 0,5µm, noch bevorzugter weniger als 0,1 µm, Abweichung erst während des laufenden Prägeprozesses, insbesondere gegen Ende des Prägeprozesses, vorzugsweise wenn der endgültige Abstand R der Prägeposition im Wesentlichen erreicht ist beziehungsweise wenn der Linsenwafer 10 geformt, aber noch nicht ausgehärtet ist.

In einer weiteren Ausführungsform der Erfindung erfolgt die Steuerung der Bewegung der Stempel aufeinander zu weggesteuert, also insbesondere über Messgeräte zur Erfassung des Abstands R, der kontinuierlich mindestens an einer Position am Umfang des Stempelwerkzeugs gemessen wird.

Zur Erzielung einer homogenen Oberfläche des Linsenwafers 10 erfolgt gemäß einer bevorzugten Ausführungsform zumindest das Aufeinander-zu-Bewegen bis zur Prägeposition im Vakuum, damit das Bilden von Gasblasen oder Hohlräumen beim Ausfüllen des Prägeraumes 19 durch das aushärtbare Fluid 15 vermieden wird.

Gemäß einer vorteilhaften Ausführungsform der Erfindung ist vorgesehen, dass ein gastransparentes Polymer als aushärtbares Fluid 15 verwendet wird.

Gemäß einer weiteren vorteilhaften Ausführungsform der Erfindung ist vorgesehen, dass mindestens einer der Stempel 1, 2 aus einem Material mit offener Porosität gefertigt wird, wobei die Porosität derart bemessen ist, dass das aushärtbare Fluid 15 nicht in die Poren eindringen kann, Gasmoleküle aber ungehindert durch den porösen Stempel entweichen können.

Der sich an den Prägeprozess und Aushärteprozess anschließende Ausstoßprozess, bei welchem das bei der Linsenwafer 10 ausgestoßen wird, dann durch Anlegen eines Überdrucks an der den Linsenwafer 10 gegenüberliegenden Seite des porösen Stempels erfolgen.

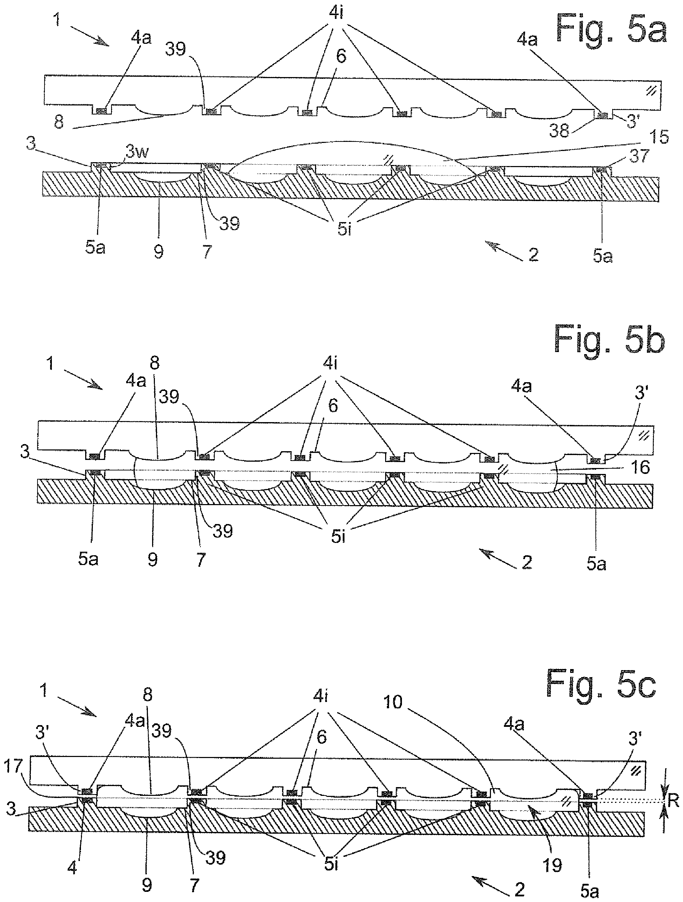

In der in Figuren 5a bis 5c gezeigten Ausführungsform ist zusätzlich zu der in Figur 2b gezeigten Ausführungsform mindestens ein als Podest 39 ausgebildeter Vorsprung, bei der hier gezeigten Ausführungsform eine Vielzahl von Podesten 39, vorgesehen. Die Höhe der Podeste 39 ist mindestens halb so hoch, insbesondere mindestens ¾, und maximal genauso hoch wie die Höhe H, H1 oder H2 des Damms 3. Die Breite der Podeste 39 ist mindestens halb so breit, insbesondere mindestens ¾, und maximal genauso breit wie die Breite B des Damms 3.

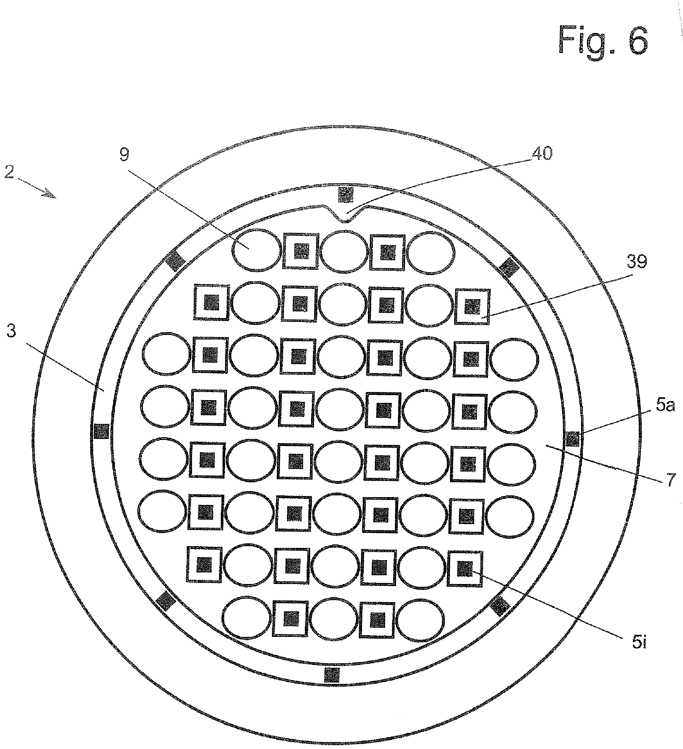

Die Podeste 39 sind immer jeweils äquidistant zu zwei benachbarten zweiten Prägestrukturen 9 des zweiten Stempels 2 (siehe Figur 6).

Die Podeste 39 sind vorzugsweise monolithisch mit dem zweiten Stempel 2.

Die Podeste 39 können, insbesondere konisch, verjüngend aus der Prägeseite des zweiten Stempels 2 hervorragen.

Besonders vorteilhaft ist es, die inneren Ausrichtungsmarken 5i in die Podeste 39, insbesondere an deren von der zweiten Aufnahmeeinrichtung 22 abgewandten Seite, einzubetten. Auf diese Weise wird der Abstand zwischen den korrespondierenden Ausrichtungsmarken 4i minimiert, so dass eine genauere Erfassung durch die Detektoreinrichtung und um so genauere Ausrichtung der Stempel 1, 2 ermöglicht wird.

Die Podeste 39 sind bei beiden Ausführungsformen gemäß Figur 2a und 2b denkbar.

Weiterhin ist erfindungsgemäß in einer Ausführungsform vorgesehen, dass der Damm 3 und/oder der Damm 3' derart elastisch verformbar ausgebildet sind, dass beim Prägen durch Kontakt der Stirnflächen 37 und 38 eine Abdichtung des Prägeraums 19 erfolgt.

Der erste Stempel 1 könnte beispielsweise aus Glas sein, während der zweite Stempel 2 aus Polymer ist, wobei das Polymer des Damms 3 und/oder des Damms 3' aus weicherem Polymer bestehen kann als das Polymer des zweiten Stempels 2.

In Figur 6 ist eine Aufsicht auf den zweiten Stempel 2 gezeigt und dort ist ein vom Damm 3 und/oder Damm 3' nach innen in Richtung des Prägeraums 19 weisender Vorsprung 40 vorgesehen, der für die Ausbildung einer Ausnehmung am Linsenwafer 10 verantwortlich ist. Diese Ausnehmung entspricht vorzugsweise einer bei Wafern bekannten Ausnehmung (notch). Dadurch wird die weitere Handhabung des Linsenwafers 10 deutlich vereinfacht.

Soweit die Ausrichtungsmarken 4a, 5a im Damm 3 und/oder 3' integriert ausgebildet sind, erfüllen die Dämme 3, 3' nicht nur die Funktion der Begrenzung des Prägeraums 19, sondern bringen auch eine verbesserte Ausrichtungsgenauigkeit mit sich, da die Ausrichtungsmarken näher aneinanderrücken und schärfer in der Detektoreinrichtung erfassbar sind.

Dies gilt auch für die Ausrichtungsmarken 4i, 5i, soweit diese in den Podesten 39 integriert ausgebildet sind.

### Bezugszeichenliste

- 1: erster Stempel
- 2: zweiter Stempel
- 3, 3': Damm
- 3w, 3w': Wand
- 4a, 4i: erste Ausrichtungsmarken
- 5a, 5i: zweite Ausrichtungsmarken
- 6: erste Prägeseite
- 7: zweite Prägeseite
- 8: erste Prägestrukturen
- 9: zweite Prägestrukturen
- 10: Linsenwafer
- 11: Oberseite
- 12: Unterseite
- 13: erste optisch aktive Fläche
- 14: zweite optisch aktive Fläche
- 15: aushärtbares Fluid
- 18: Kante
- 19: Prägeraum
- 20: Mikrolinse
- 21: erste Aufnahmeeinrichtung
- 22: zweite Aufnahmeeinrichtung
- 23: erste Aufnahmeseite
- 24: zweite Aufnahmeseite
- 25: Vakuumbahn
- 26: Vakuumbahn
- 27: Halterung
- 28: Rotationseinrichtung
- 29: X-Antrieb
- 30: Y-Antrieb
- 31: Hubantrieb
- 32: Mikroskop
- 33: Mikroskop
- 34: Aktor
- 35: Aktor
- 36: Aktor
- 37: Stirnfläche
- 38: Stirnfläche
- 39: Podeste
- 40: Vorsprung
- Di: Innendurchmesser
- H, H1, H2: Höhe
- B: Ringbreite
- R: Abstand

## Patentansprüche

1. Vorrichtung zur Herstellung eines eine Vielzahl von Mikrolinsen (20) aufweisenden Linsenwafers (10) mit:
- einem Stempelwerkzeug mit
a) einem ersten Stempel (1) mit einer erste Prägestrukturen (8) aufweisenden ersten Prägeseite (6) und
b) einem zweiten Stempel (2) mit einer zweite Prägestrukturen (9) aufweisenden zweiten Prägeseite (7), wobei mindestens einer der Stempel (1, 2) an seiner Prägeseite (6, 7) einen den Prägeraum (19) umfänglich zumindest teilweise begrenzenden Vorsprung aufweist,
- einer ersten Aufnahmeeinrichtung (21) zur Aufnahme des ersten Stempels (1) an einer von der ersten Prägeseite (6) abgewandten ersten Aufnahmeseite (23) und
- einer zweiten Aufnahmeeinrichtung (22) zur Aufnahme des zweiten Stempels (2) an dessen von der zweiten Prägeseite (7) abgewandten zweiten Aufnahmeseite (24), **dadurch gekennzeichnet, dass**
eine gesteuerte Bewegung des zweiten Stempels (2) in einer X-Y-Ebene und einer dazu orthogonal verlaufenden Z-Richtung sowie eine gesteuerte Rotation um eine parallel zur Z-Richtung verlaufende Rotationsachse zur Ausrichtung des ersten Stempels (1) mit dem zweiten Stempel (2) ausführbar ist, und wobei die Ausrichtung anhand der Position der Stempel (1, 2) steuerbar ist, wobei der erste Stempel (1) erste Ausrichtungsmarken (4a, 4i) zur Ausrichtung des ersten Stempels (1) gegenüber zweiten Ausrichtungsmarken (5a, 5i) des zweiten Stempels (2) aufweist.

2. Vorrichtung nach Anspruch 1, bei der der erste Stempel (1) die in die erste Prägeseite (6) eingebetteten ersten Ausrichtungsmarken (4a, 4i) zur Ausrichtung des ersten Stempels (1) gegenüber den in die zweite Prägeseite (7) eingebetteten zweiten Ausrichtungsmarken (5a, 5i) des zweiten Stempels (2) aufweist.

3. Vorrichtung nach Anspruch 2, bei der als erste Ausrichtungsmarken (4a, 4i) mindestens zwei im Bereich der ersten Prägestrukturen (8) angeordnete innere Ausrichtungsmarken und mindestens zwei äußere Ausrichtungsmarken außerhalb der ersten Prägestrukturen (8), insbesondere außerhalb des Vorsprungs vorgesehen sind.

4. Vorrichtung nach Anspruch 1 oder 2, bei der ein Hubantrieb (31) vorgesehen ist, durch welchen die Bewegungen der zweiten Aufnahmeeinrichtung (22) in Z-Richtung ausführbar ist.

5. Vorrichtung nach Anspruch 1 oder 2, die Keilfehlerausgleichsmittel (34, 35, 36) umfasst, mit welchem ein Keilfehler zwischen den Stempeln (1, 2) ausgleichbar ist.

6. Vorrichtung nach Anspruch 1 oder 2, bei der eine, insbesondere in Z-Richtung bewegbare, Optik (32, 33) zur Erfassung der Position der Ausrichtungsmarken (4a, 4i, 5a, 5i) in X-,Y- und Z-Richtung vorgesehen ist.

7. Vorrichtung nach Anspruch 1 oder 2, bei der mindestens einer der Stempel (1, 2), insbesondere der erste Stempel (1), für elektromagnetische Strahlung durchlässig ist.

8. Vorrichtung nach Anspruch 1 oder 2, bei der der erste Stempel (1) aus Glas und der zweite Stempel (2) aus Polymer gebildet ist.

9. Vorrichtung nach Anspruch 1 oder 2, bei der das Polymer des Vorsprungs aus weicherem Polymer besteht als das Polymer des zweiten Stempels (2).

10. Verfahren zur Herstellung eines eine Vielzahl von Mikrolinsen (20) aufweisenden Linsenwafers (10) mit einer Vorrichtung nach einem der Ansprüche 1 bis 9, mit folgenden Schritten, insbesondere mit folgendem Ablauf:
- gegenüberliegende Anordnung und Fixierung der Stempel (1, 2) auf Aufnahmeeinrichtungen (21, 22),
- zumindest grobe Ausrichtung der Stempel (1, 2) zueinander in X- und Y-Richtung sowie um die Rotationsachse,
- Aufbringung eines aushärtbaren Fluids (15), insbesondere Polymers, in fluider Form auf eine der Prägeseiten (6, 7), insbesondere die zweite Prägeseite (7), und
- Durchführung eines Keilfehlerausgleichs durch Keilfehlerausgleichsmittel (34, 35 36) zur parallelen Ausrichtung der Prägeseiten (6, 7),
- Prägen des Linsenwafers (10) zur Formung und anschließenden Aushärtung des aushärtbaren Fluids (15), wobei die Formung durch Aufeinander-zu-Bewegung der Stempel (1, 2) erfolgt.

11. Verfahren nach Anspruch 10, bei dem das Prägen ohne Kontakt zwischen den Stempeln (1, 2) erfolgt.

12. Verfahren nach Anspruch 10 oder 11, bei dem das Prägen kraft- und/oder positionsgeregelt erfolgt.

## Claims

1. A device for producing a lens wafer (10) comprising a multiplicity of microlenses (20) with:
- a punching tool with
a) a first punch (1) with a first embossing side (6) comprising first embossing structures (8) and
b) a second punch (2) with a second embossing side (7) comprising second embossing structures (9), wherein at least one of the punches (1, 2) comprises at its embossing side (6, 7) a projection at least partially limiting the embossing space (19) at the periphery,
- a first holding fixture (21) for holding the first punch (1) at a first holding side (23) facing away from the first embossing side (6) and
- a second holding fixture (22) for holding the second punch (2) at a second holding side (24) facing away from the second embossing side (7), **characterised in that**
a controlled movement of the second punch (2) in an X-Y plane and in a Z-direction running orthogonal thereto as well as a controlled rotation about an axis of rotation running parallel to the Z-direction can be performed for the alignment of the first punch (1) with the second punch (2), and wherein the alignment can be controlled with the aid of the position of the punches (1, 2), wherein the first punch (1) comprises first alignment marks (4a, 4i) for the alignment of the first punch (1) with respect to second alignment marks (5a, 5i) of the second punch (2).

2. The device according to claim 1, wherein the first punch (1) comprises the first alignment marks (4a, 4i) embedded in the first embossing side (6) for the alignment of the first punch (1) with respect to the second alignment marks (5a, 5i) of the second punch (2) embedded in the second embossing side (7).

3. The device according to claim 2, wherein the at least two inner alignment marks arranged in the region of the first embossing structures (8) are provided as first alignment marks (4a, 4i) and at least two outer alignment marks are provided outside the first embossing structures (8), in particular outside the projection.

4. The device according to claim 1 or 2, wherein a lift drive (31) is provided, by means of which the movements of the second holding fixture (22) can be carried out in the Z direction.

5. The device according to claim 1 or 2, which comprises the wedge error compensation means (34, 35, 36), with which a wedge error between the punches (1, 2) can be compensated for.

6. The device according to claim 1 or 2, wherein a lens system (32, 33), in particular movable in the Z-direction, is provided for detecting the position of the alignment marks (4a, 4i, 5a, 5i) in the X, Y and Z direction.

7. The device according to claim 1 or 2, wherein at least one of the punches (1, 2), in particular the first punch (1), is permeable for electromagnetic radiation.

8. The device according to claim 1 or 2, wherein the first punch (1) is formed from glass and the second punch (2) from polymer.

9. The device according to claim 1 or 2, wherein the polymer of the projection is made of softer polymer than the polymer of the second punch (2).

10. A method for producing a lens wafer (10) comprising a multiplicity of microlenses (20) with a device according to any one of claims 1 to 9, with the following steps, in particular with the following sequence:
- arrangement and fixing of the punches (1, 2) lying opposite one another on holding fixtures (21, 22),
- at least rough alignment of the punches (1, 2) with respect to one another in the X and Y direction and about the axis of rotation,
- application of a hardenable fluid (15), in particular polymer, in fluidic form on one of the embossing sides (6, 7), in particular the second embossing side (7), and
- carrying out a wedge error compensation by wedge error compensation means (34, 35, 36) for the parallel alignment of the embossing sides (6, 7),
- embossing the lens wafer (10) for the formation and subsequent hardening of the hardenable fluid (15), wherein the formation takes place by movement of the punches (1, 2) towards one another.

11. The method according to claim 10, wherein the embossing takes place without contact between the punches (1, 2).

12. The method according to claim 10 or 11, wherein the embossing takes place force- and/or position-controlled.

## Revendications

1. Dispositif pour fabriquer une tranche de lentilles (10) présentant une pluralité de micro-lentilles (20), comprenant :
- un outil de poinçonnage comprenant
a) un premier poinçon (1) avec une première face de marquage (6) présentant des premières structures de marquage (8) et
b) un second poinçon (2) avec une seconde face de marquage (7) présentant des secondes structures de marquage (9), dans lequel au moins un des poinçons (1, 2) présente sur sa face de marquage (6, 7), une saillie délimitant l'espace de marquage (19) au moins partiellement sur son pourtour,
- un premier dispositif de réception (21) pour recevoir le premier poinçon (1) sur une première face de réception (23) détournée de la première face de marquage (6) et
- un second dispositif de réception (22) pour recevoir le second poinçon (2) sur sa seconde face de réception (24) détournée de la seconde face de marquage (7), **caractérisé en ce que**
un mouvement piloté du second poinçon (2) dans un plan X-Y et un sens Z orthogonal à celui-ci ainsi qu'une rotation pilotée sur un axe de rotation parallèle au sens Z peut être effectué pour aligner le premier poinçon (1) avec le second poinçon (2), et dans lequel l'alignement peut être piloté à l'aide de la position des poinçons (1, 2), dans lequel le premier poinçon (1) présente des premiers marquages d'alignement (4a, 4i) pour aligner le premier poinçon (1) par rapport à des seconds marquages d'alignement (5a, 5i) du second poinçon (2).

2. Dispositif selon la revendication 1, dans lequel le premier poinçon (1) présente les premiers marquages d'alignement (4a, 4i) enchâssés dans la première face de marquage (6) pour aligner le premier poinçon (1) par rapport aux seconds marquages d'alignement (5a, 5i) du second poinçon (2) enchâssés dans la seconde face de marquage (7).

3. Dispositif selon la revendication 2, dans lequel en tant que premiers marquages d'alignement (4a, 4i) sont prévus au moins deux marquages d'alignement intérieurs disposés au niveau des premières structures de marquage (8) et au moins deux marquages d'alignement extérieurs à l'extérieur des premières structures de marquage (8) en particulier à l'extérieur de la saillie.

4. Dispositif selon la revendication 1 ou 2, dans lequel un entraînement de levage (31) est prévu, avec lequel les mouvements du second dispositif de réception (22) peuvent être exécutés dans le sens Z.

5. Dispositif selon la revendication 1 ou 2, qui comprend des moyens de compensation d'erreur de coin (34, 35, 36) avec lesquels une erreur de coin entre les poinçons (1, 2) peut être compensée.

6. Dispositif selon la revendication 1 ou 2, dans lequel une optique (32, 33) mobile en particulier dans le sens Z, est prévue pour détecter la position des marquages d'alignement (4a, 4i, 5a, 5i) dans le sens X, Y et Z.

7. Dispositif selon la revendication 1 ou 2, dans lequel au moins un des poinçons (1, 2), en particulier le premier poinçon (1) est perméable au rayonnement électromagnétique.

8. Dispositif selon la revendication 1 ou 2, dans lequel le premier poinçon (1) est fabriqué en verre et le second poinçon (2) est en polymère.

9. Dispositif selon la revendication 1 ou 2, dans lequel le polymère de la saillie est en polymère plus tendre que le polymère du second poinçon (2).

10. Procédé de fabrication d'une tranche de lentilles (10) présentant une pluralité de micro-lentilles (20), comprenant un dispositif selon l'une des revendications 1 à 9, comprenant les étapes suivantes, en particulier le déroulement suivant :
- agencement opposé et fixation des poinçons (1, 2) sur des dispositifs de réception (21, 22),
- agencement au moins grossier des poinçons (1, 2) entre eux dans les sens X et Y ainsi que sur l'axe de rotation,
- application d'un fluide (15) durcissable, en particulier du polymère, sous forme fluidique sur une des faces de marquage (6, 7), en particulier la seconde face de marquage (7), et
- exécution d'une compensation d'erreur de coin par des moyens de compensation d'erreur de coin (34, 35, 36) pour l'alignement parallèle des faces de marquage (6, 7),
- marquage de la tranche de lentilles (10) pour la formation et le durcissement consécutif du fluide durcissable (15), dans lequel la formation est effectuée par un mouvement de rapprochement des poinçons (1, 2) entre eux.

11. Procédé selon la revendication 10, dans lequel le marquage entre les poinçons (1, 2) s'effectue sans contact.

12. Procédé selon la revendication 10 ou 11, dans lequel le marquage s'effectue par réglage de force et/ou de position.
